# EUROPEAN PATENT SPECIFICATION

(11) **EP 2 518 015 B1**
(45) Date of publication and mention of the grant of the patent: **08.11.2017**
(21) Application number: 09852572.8
(22) Date of filing: 25.12.2009
(51) Int. Cl.: C01B 33/02, B22D 11/01, B22D 11/115

(54) **ELECTROMAGNETIC CASTING APPARATUS FOR SILICON**
ELEKTROMAGNETISCHE GUSSVORRICHTUNG FÜR SILIZIUM
APPAREIL DE COULAGE ÉLECTROMAGNÉTIQUE POUR DU SILICIUM

(43) Date of publication of application: 31.10.2012
(73) Proprietor: Consarc Corporation, Rancocas, NJ 08073 (US)
(72) Inventor: KANEKO, Kyojiro, Ibaraki-shi Osaka 5670832 (JP)
(74) Representative: Ackroyd, Robert
(86) International application number: PCT/JP2009/071620
(87) International publication number: WO 2011/077556

(56) References cited:
- JP-A- S6 453 732
- JP-A- 54 009 172
- JP-A- 56 037 293
- JP-A- 2008 174 397

## Description

### Technical Field

This invention relates to the silicon electromagnetic casting apparatus which is used to manufacture silicon ingot for the silicon substrates used mainly in solar cells.

### Background Art

In order to solve the global environmental issues, use of solar cells has increased. Due to the abundant resources and high efficiency of photoelectric conversion, a majority of the manufactured solar cells uses silicon crystals. Among them, production of solar cells using polycrystalline silicon substrates manufactured through electromagnetic casting is increasing.

In this method of electromagnetic casting of silicon in a reaction vessel, a copper crucible in which a cooling water is circulated and an induction coil installed on the outer surface of the copper crucible are used. Levitation melting of the silicon mass is carried out in the copper crucible using electromagnetic force, the silicon mass is solidified by continually moving downwards and thus, silicon ingot is manufactured.

In the above method, since levitation melting of the silicon mass is carried out in the water-cooled copper crucible using electromagnetic force, the molten silicon does not come in contact with the inner surface of the crucible and hence, contamination of the molten silicon by impurities from the crucible can be avoided. Also, the crucible used for melting of the silicon mass hardly come in contact with the molten silicon; it is not damaged and can be used permanently.

Thus, the silicon electromagnetic casting mentioned above was regarded as an industrial manufacturing method which attains high productivity by manufacturing long silicon ingot continuously, high quality and homogeneity by virtue of stable and constant casting conditions.

### Disclosure of the Invention

### Problems to be solved by the Invention

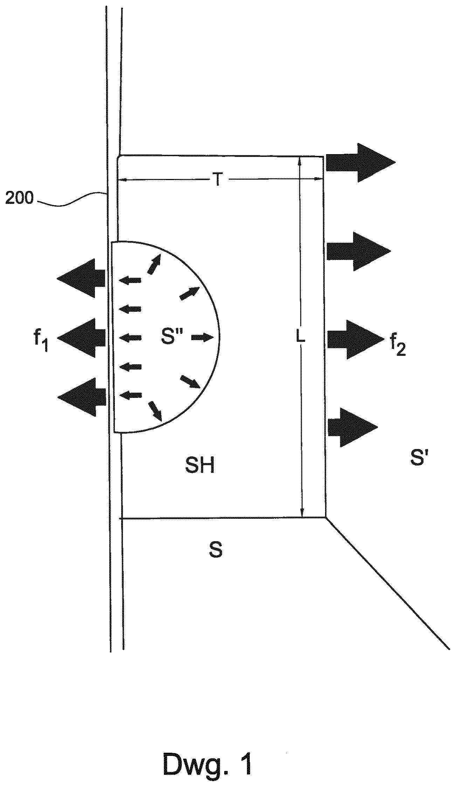

However, the following problem arose in the silicon electromagnetic casting stated above. Namely, in the process of solidification of the silicon ingot by continually moving it downwards, a small amount of molten silicon gains entry into a small gap between the solidified silicon ingot and the crucible at the contact point of three members, the crucible, the molten silicon and the solidified silicon ingot, as shown in drawing 1. Cubical expansion took place during the solidification of this molten silicon which gained entry into the gap, thus generating a force pushing the inner surface of the crucible. Cubical expansion of approximately 9% takes place when silicon changes its state from liquid to solid. In other words, this phenomenon was a result of the cubical expansion during solidification which is a unique property of silicon in contrast to other common metals.

The force pushing the inner surface of the crucible outwards when the molten silicon gained entry into the gap between the crucible and the silicon ingot solidifies and cubical expansion takes place, was not so large as a whole when the ingot cross-section is small. This force balances with the push-back force exerted due to the hardness of the crucible thereby preventing any further outward deflection of the crucible even when the casting process is continued.

However, as the size of the silicon ingot increases and thereby the ingot cross-section increases, the pushed area increases and along with that, the pushing force increases cumulatively on account of the force-momentum relationship. This increased force exceeds the hardness of the crucible and brings about a permanent deformation of the crucible with large outwards deflection. When the crucible expands outwards at a point which is at the height of the solidification interface of the silicon ingot and the width of the crucible increases, ingot of an increased width matching to that of the crucible, is formed. The width of the silicon ingot gradually increases as the casting process continues and the outward curvature of the crucible increases further. As a result, when the width of the central part of the crucible becomes larger than that of its lower part, the silicon ingot could not be moved downward any more.

For example, in case of the four-sided crucible having a square-shaped cross-section which is used in manufacturing four-sided silicon ingot, the permanent outward deflection of the crucible at the solidification interface height began to appear when the width of the cross-section of the silicon ingot was 35 cm. The degree of deflection of the crucible increased as the casting process is continued, and the increasing deflection was accompanied with an increase of the side length of the silicon ingot. Thus, from a certain point onward, the silicon ingot could not be moved downward any more.

This invention was made based on the above described problem and directs against providing a silicon electromagnetic casting apparatus which would prevent the outward deflection of the crucible during silicon electromagnetic casting.

### Means to solve the problems

In order to achieve the above mentioned objective, the present invention provides a silicon electromagnetic casting apparatus comprising a reaction vessel, a conductive crucible installed in the internal part of the reaction vessel and an induction coil installed on the outer circumference of the said crucible; wherein constant pressure is maintained in the internal part of said reaction vessel using a prescribed gas and the silicon inside said crucible is solidified after melting it by induction heating by applying voltage on said induction coil; and wherein a hard structure made from electrical insulating material is fitted onto the outer peripheral surface of said crucible. Based on the above, even though molten silicon gains entry into the small gap between the silicon ingot solidified from molten silicon and the crucible, and this entered silicon exerts force on the inner surface of the crucible as it undergoes solidification accompanied by cubical expansion, outward deflection of the crucible is prevented because of the hard structure fitted on the outer peripheral surface of the crucible.

Based on the above, outward deflection of the crucible at the position of the height of the solidification interface which is particularly prone to be outwardly deformed, can be prevented.

Furthermore, the above mentioned hard structure may also be fitted on the outer peripheral surface of the said crucible having an inner diameter of 35 cm or more. Based on this, outward deflection of the crucible having a size being particularly prone to be outwardly deformed, can be prevented.

### Effects of the Invention

As a result of the present invention, even though molten silicon gets entry into a small gap between the silicon ingot solidified from a molten silicon and the crucible, and this entered silicon exerts a force on the inner surface of the crucible as it undergoes solidification accompanied by cubical expansion, outward deflection of the crucible is prevented because of the hard structure fitted on the outer peripheral surface of the crucible. Therefore, stable and continuous manufacturing of silicon ingot is possible in the invention.

### Brief Description of the Drawings

[Dwg.1] It is a cantilever beam model used for estimating the force which pushes the crucible outwards, caused by the cubical expansion accompanying the solidification of the molten silicon entered into the gap between the crucible and the silicon ingot.
[Dwg.2] It is a schematic diagram of the silicon electromagnetic casting apparatus of Example 1.
[Dwg.3] It is a perspective view of a four-sided prism-shaped crucible having a hard structure shown in Dwg. 2.
[Dwg.4] It is a schematic diagram of the silicon electromagnetic casting apparatus of Example 2.
[Dwg.5] It is a perspective view of a cylindrical crucible having the hard structure shown in Dwg. 4.

### Description of the Symbols

- 1··········: The apparatus
- 100··········: Reaction vessel
- 200··········: Crucible
- 300··········: Induction coil
- 310··········: Induction coil placed on the upper side
- 320··········: Induction coil placed on the lower side
- 330··········: Magnetic shield
- 400··········: Graphite support
- 500··········: Vertical motion device
- 600··········: Temperature control reactor
- 700··········: Raw material supply unit
- 810, 820······: Hard structure

### Best Mode for Carrying out the Invention

The embodiment of the silicon electromagnetic apparatus (referred to as apparatus 1 hereafter) of the present invention is now explained referring to drawings.

### <Whole structure>

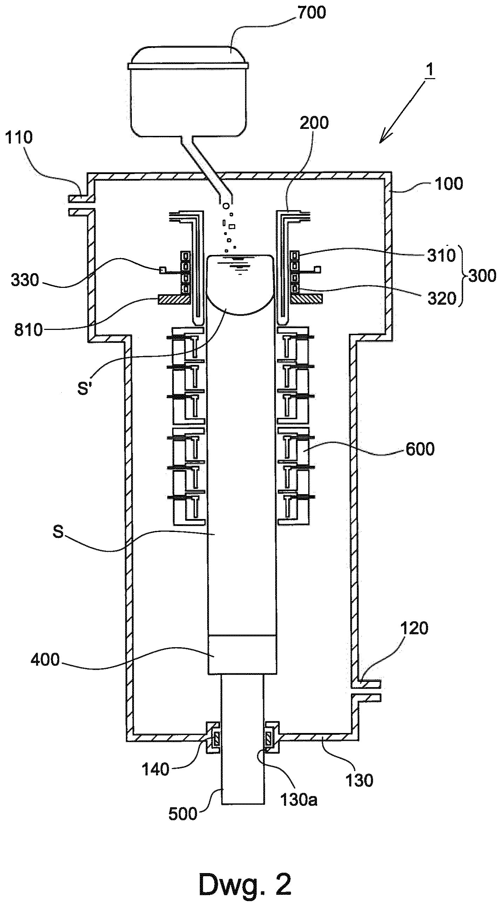

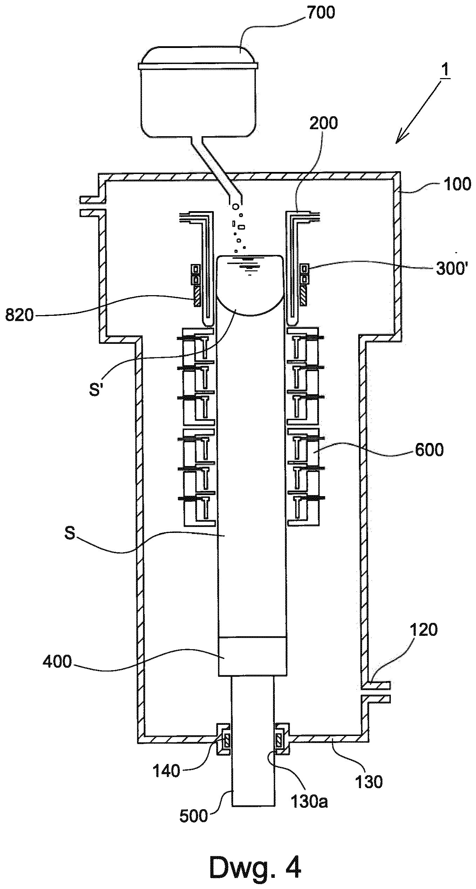

The apparatus 1 comprises, as shown in drawing 2 or 4, a reaction vessel100, a crucible 200 placed inside the reaction vessel 100, induction coils 300 and 300' installed on the outer circumference of the crucible 200, a graphite support 400 on which a silicon mass S is mounted, a vertical motion device 500 which moves the graphite support 400 vertically, a temperature control reactor 600 which regulates the solidification of molten silicon S' and a raw material supply unit 700 installed on top of the crucible 200. The structures of the above parts can be the same as that used in a conventional apparatus.

With respect to silicon, it is called "silicon mass" before heated; "molten silicon" S' in a molten state after heating; and "silicon ingot" S in a solidified state after cooling.

### < Structure of the reaction vessel>

The reaction vessel 100 is an air-tight container which is installed such that it covers the crucible 200, the induction coil 300, etc.

The reaction vessel 100 has feeding inlet 110 formed in the upper part thereof and exhaust outlet 120 formed in the lower part thereof. In casting, the pressure in the internal part of the reaction vessel100 is decreased to 13.33 Pa (0.1 Torr) by using a vacuum pump (not shown in the drawing) and a prescribed gas (such as Argon gas) is supplied from the feeding inlet 110 until the inside pressure is equal to the atmospheric pressure.

An insertion hole 130a is drilled at the bottom surface 130 of the reaction vessel 100 and the vertical motion device 500 is inserted in it. This insertion hole 130a preferably have a sealing material 140 made of rubber and the like in order to make the reaction vessel 100 completely air-tight.

### < Structure of the crucible >

The crucible 200 is made up of copper and its side walls are cooled by circulating a cooling water in its internal part. Further, 210 denotes a tube used for letting the cooling water in and out.

This crucible 200 is split into multiple segments in the circumferential direction in order to insulate electrically in the circumferential direction. Electrical insulating material such as mica is preferably inserted between each of the segments of the crucible 200.

In addition, the cross-section of the crucible 200 shown in drawings 2 and 3 is square while that of the crucible shown in drawings 4 and 5 is circular.

### <Constitution of the hard structure>

A hard structure made up of electrical insulating material is fitted on the outer peripheral surface of the crucible. For example, on the crucible 200 shown in Dwg. 3, an four-sided prism-shaped hard structure 810 is fitted. Further, on the crucible 200 shown in Dwg. 5, a cylindrical hard structure 820 is fitted.

The cantilever beam model shown in Dwg. 1 is applicable for estimating the force which pushes the crucible 200 outwards caused by the cubical expansion accompanying the solidification of the silicon solution S" which gained entry into the gap between the crucible 200 and the silicon ingot S.

In this model, the silicon solution S" entered into the gap gets trapped in the hemispherical silicon pillar SH of length (L) 4 mm, thickness (T) 2 mm and width (W) 2 mm; and solidifies. The force f1 caused by the expansion accompanying such solidification pushes in a direction perpendicular to the inner surface of the crucible while an equivalent force f2 pushes the silicon pillar SH in the opposite direction. Assuming that the force f2 acting on the silicon pillar SH at the central point of the pillar since the lower end of the silicon pillar SH is a fixed cantilever beam; approximate calculation can be applied to the deforming behaviour of the silicon pillar SH as for deforming behaviour of a cantilever beam having a uniform cross-section with a length of 4 mm and thickness and width of 2 mm which is subjected to concentrated load at the longitudinal central point.

If the elastic modulus and the yield bending value are determined, it is possible to estimate the relationship between the amount of deflection and the force at the time of deflection of the cantilever beam which is subjected to concentrated load at the longitudinal central point. When a beam is subjected to load, the bending of the beam increases proportionally along with an increase of the load in the region of elastic deformation. This proportional relationship is maintained until the bending of the beam reaches to yield bending value. Once the bending of the beam reaches to the yield bending value, the deflection of the beam continues in the region of plastic deformation and the load does not differ much from the load in case of yield bending. Hence, the maximum load required for the continued deflection of the beam can be treated almost equal to the load at the point when the bending of the beam becomes equal to the yield bending value. Accordingly, force f1 pushes the crucible 200 in the opposite direction with the same strength as the maximum load of yield bending value.

The elastic modulus (Young's modulus) of the solid silicon near its melting point and the yield bending value can be estimated by values of other substances. Although silicon is a semi conductive material at room temperature, it exhibits metallic properties at temperatures around 500 °C or more. In addition to this, silicon, at high temperatures near its melting point, becomes soft and easily undergoes plastic deformation. Generally, Young's modulus of metals is 50 to 150 GPa and that of glass is 65 to 90 GPa in the room temperature as for reference. Since Young's modulus has very little temperature dependency, it can be considered to be about 30% at temperatures near the melting point. Consequently, Young's modulus of silicon at room temperature is considered to be 100 GPa, while that at temperatures near the melting point is considered to be 30 GPa.

Generally, the yield bending value of metals is defined as 0.2% yield strength at room temperature. In other words, yield bending is 0.2% for metals. However, since the yield bending value largely depends on temperature and decreases with the temperature increase, at temperatures near melting point, it is considered to be 1/10^{th} as compared to that at room temperature. As a result, the yield bending value of silicon at temperatures near melting point is considered to be 0.02%.

The concentrated load at the longitudinal central point wherein the cantilever beam of the silicon pillar SH of length 4 mm, thickness 2 mm, width 2 mm and Young's modulus 30 GPa, bends to the maximum of 0.02%, is calculated to be about 4N. At this time, the amount of deflection (maximum deflection) of the beam at the longitudinal central point of the beam becomes 0.00027 mm. Thus, according to the calculation in this model, the force which pushes the crucible 200 outwards caused by the cubical expansion accompanying the solidification of the silicon solution S" entered into the gap between the crucible 200 and the silicon ingot, is calculated as approximately 4N for a length of 2 mm along the horizontal line where the crucible 200 comes in contact with the molten silicon S' and the silicon ingot S.

The deformation behaviour of the crucible used to manufacture the silicon ingot S having a square-shaped cross-section of 350 mm is inferred below on the basis of the force pushing the crucible 200 outwards calculated as above. If the inner side of a crucible 200 is 350 mm, a total force of approximately 700N is loaded on one side of the square crucible along the solidification interface of silicon ingot S, as an equally distributed load.

On the other hand, in case of the hard structure 810 made up of electrically insulating material fitted on the outer periphery of the crucible 200, the bend strength is estimated below, wherein fiber reinforced plastic is used in order to prevent the bending of a crucible 200 due to the cubical expansion of silicon solution S". The fiber reinforced plastic comprises glass fiber while a material having Young's modulus of 10 GPa can be selected as the material. When a structure of thickness 100 mm and width 30 mm made of glass fiber reinforced plastic is fitted on the outer periphery of a crucible 200 having an inner side opposite to the hard structure of 350 mm, this hard structure is approximately calculated to be loaded together with the crucible 200 a maximum force of 700N as an equally distributed load on one of the four inner sides thereof. In this case, the relationship between the bending and the force exerted on the crucible 200 and the hard structure 810 of fiber reinforced plastic can be calculated by using the sizes of the divided segments of the crucible 200. It is calculated as a total of the repulsive force wherein a concentrated load is subjected at both the free ends of a copper beam with uniform sections having a thickness of 33 mm, width of 23.3 mm and span of 700 mm, and the repulsive force wherein a uniform load is subjected on a fiber reinforced plastic beam having a thickness of 100 mm, width of 30 mm and span of 350 mm as a beam having two free ends.

When a load of 700N is applied to this built-up composite beam, wherein Young's modulus of fiber reinforced plastic is considered to be 10 GPa and that of copper is considered to be 110 GPa, the maximum deformation at the center of the fiber reinforced plastic beam is calculated to be 0.011 mm, the maximum bending stress to be 0.43 MPa and the maximum bending rate to be 0.0043%. The said maximum bending stress is sufficiently lower than 130 MPa of the tensile strength of the fiber reinforced plastic. Consequently, if a hard structure 810 made up of fiber reinforced plastic is fitted on the crucible 200, permanent deformation of the crucible 200, which is subjected to the force caused by the cubical expansion accompanying the solidification of the entered silicon solution, can be prevented and the silicon ingot S can be continuously moved downward.

In using a cylindrical crucible 200 for manufacturing a cylindrical silicon ingot S, the strength against deformation of crucible 200 wherein a hard structure 820 of fiber reinforced plastic is fitted on its outer periphery, is estimated below. In the calculation of the strength of pressure vessel specified in the Japanese Industrial Standards (JIS B9265), it has been specified when inner pressure is applied in a thin cylinder, a safety ratio of 4 should be used for the tensile strength which acts in the circumferential direction of the vessel. The inner diameter of a crucible 200 used for casting silicon is 600 mm and its outer diameter is 660 mm. The thickness of hard structure 820 of fiber reinforced plastic fitted on the outer periphery of the crucible 200 is 2 mm and its width is 50 mm. In this case, the force which pushes the inner surface of the crucible 200 at the time of solidification of the molten silicon S" which entered into the gap between the crucible 200 and the solidified silicon ingot S is 2N per 1 mm. Hence, the force that acts on the entire inner circumference 1884 mm of the crucible 200 is assumed to be 3768N. Thus, the total force which pushes the crucible 200 outwards is approximately calculated to be the force which, by using the hardness of the crucible 200, pushes the cylindrical hard structure 820 made up of fiber reinforced plastic, which is fitted on the outer peripheral surface of the crucible 200, uniformly from the inside, without considering repulsive force of the hardness of the crucible 200.

As a result, a total force of 3768N is approximately calculated to be loaded evenly over the inner surface of 103620 mm² of the cylindrical hard structure 820, which is made up of fiber reinforced plastic and has an inner diameter of 660 mm, width of 50 mm and thickness of 2 mm. Hence, the tensile strength in the circumferential direction is calculated at 6.6MPa in the cylindrical hard structure 820 of inner diameter 660 mm and thickness 2 mm, which is made up of fiber reinforced plastic and has an inner pressure of 0.037 MPa. Since a margin of safety ratio of 4 is specified in the Japanese Industrial Standards (JIS B9265), if the tensile strength of the fiber reinforced plastic is 26.4 MPa or more, there is no breakage possibility of the cylindrical hard structure 820. Since the tensile strength of the fiber reinforced plastic is 130 MPa as stated above, it is sufficiently more than the required strength even if a safety ratio is considered. Thus, it prevents any damage to the cylindrical hard structure 820 which is made up of fiber reinforced plastic and fitted on the crucible 200 which is subjected to the force caused by the cubical expansion accompanying the solidification of the entered silicon solution S" as well as prevents any deformation of the crucible 200.

### <Structure of other parts>

The above induction coils 300 and 300' are used for melting the silicon mass in the crucible 200 by induction heating when voltage is applied thereon.

Especially the induction coil 300 shown in Dwg. 2 has two coils of different induction frequencies 310 and 320 one of which is placed above the other. A magnetic shield 330 is installed between the two coils 310 and 320 having different induction frequencies in order to prevent mutual magnetic action between the coils. The terminal voltage applied on each of the induction coils 310 and 320 is preferably 900V or less and more preferably 600V or less.

The temperature control reactor 600 is used for gradually cooling to the solidification of the molten silicon S'. Generally, it maintains a specified temperature gradient from the upper part to the lower part and cools the molten silicon S' gradually to the specified temperature finally.

The graphite support 400 is a pedestal made up of graphite. In casting, after the pedestal is positioned at a height equal to that of the lower induction coils with the help of the vertical motion device 500, the inserted silicon mass is mounted thereon. Then, it moves downwards along the center line of the reaction vessel 100 making a descent of the molten silicon S' downwards resulting in the solidification thereof.

The vertical motion device 500 moves the graphite support 400 vertically along the center line of the reaction vessel 100. A drive unit installed separately (not shown in the drawing) moves it vertically and appropriately according to manufacturing conditions.

The raw material supply unit 700 supplies the raw materials such as the silicon mass and graphite mass to the crucible 200 from the top. A silicon mass of a specified weight is supplied first and then the graphite mass is supplied on the upper surface of the silicon mass. This graphite mass aids silicon heating and when electric current is applied to the induction coils, the graphite mass heats up and the temperature thereof increases, then the silicon mass in the lower part heats up and its temperature increases due to the radiant heat of the graphite. When the temperature of the silicon mass exceeds a specific temperature, the electrical resistance value of the silicon mass decreases resulting in the increase of the induction current in the silicon mass and start of self-heating. Immediately following the silicon mass starts self-heating, the graphite mass on the top is withdrawn from the crucible 200 in the upward direction.

### Example 1

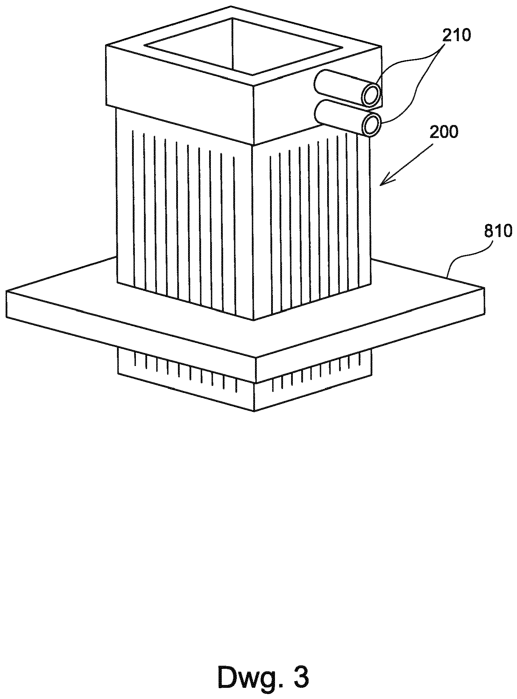

The following is an example of the silicon electromagnetic casting apparatus as shown in drawings 2 and 3. In the example, a prismatic silicon ingot S is manufactured using an apparatus having a hard structure 810 made up of electrical insulating material fitted onto the outer peripheral surface of a crucible 200 as follows.

In the example, the cross section in the casting direction of the silicon ingot S was square-shaped and its width was 35cm. Accordingly, the horizontal cross section of the crucible 200 was also square-shaped with an inner diameter of 35cm and an outer diameter of 41.6cm. The number of divisions for vertical electrical insulation of the crucible 200 was 60. The length of each segment of the crucible 200 which was divided into 60 was 70cm. Cooling water was circulated in its internal part and mica was inserted between each of the segments as an electrical insulation material. The total flow volume of the cooling water used inside the crucible 200 was 500L per minute.

In the apparatus, two induction coils 310 and 320 were placed one above the other. The upper placed induction coil 310 had two turns around the square with an inner diameter of 42.6cm and a height of 15cm. It was connected to the induction power supply with the maximum output of 350kW and the induction frequency was set to 10 kHz. The lower placed induction coil 320 had the same form as the upper induction coil 310 while it was connected to the induction power supply with the maximum output of 150kW and the induction frequency was set to 35 kHz. These two induction coils 310 and 320 placed side by side were positioned at the center of the height of crucible 200, a 3mm thick copper magnetic shield 330 was placed in between the induction coils 310 and 320 and the outer circumference of this magnetic shield 330 was cooled using a corrugated tube.

The state wherein a hard structure 810 made up of fiber reinforced plastic is fitted on the outer peripheral surface of the crucible 200 is shown in Dwg. 3. The hard structure 810 having an inner side (length of the beam) of 41.6 cm along the outer side of the crucible 200, a beam thickness of 10 cm and a beam width of 3 cm was fitted just below the lower positioned induction coil 320 in such a manner that it touches the crucible 200.

The operating procedure in this example was as follows. Firstly, the graphite support 400 having a square-shaped cross section in the downward direction and a width of 35cm was mounted on the vertical motion device 500 and inserted in the crucible 200 in such a manner that its top surface was the same level as the lower edge of the induction coil 320. Then, a silicon mass of 50kg is inserted on the top surface of the graphite support 400. A graphite mass having a square-shaped cross section in the downward direction, a width of 30cm and a height of 7cm was inserted from the top of the crucible 200 at the position of 2cm above the top surface of the inserted silicon mass. The internal pressure of the reaction vessel 100 is decreased to 13.33 Pa (0.1 Torr) using a vacuum pump and then Argon gas was supplied in the vessel until the pressure was equal to the atmospheric pressure. Then, to the upper placed induction coil 310 having an induction frequency of 10 kHz, voltage was applied with sequentially increasing up to 200 kW of inductive output followed by the increasing voltage application up to 100 kW of inductive output to the lower placed induction coil 320 having an induction frequency of 35 kHz. Thus, when electric currents were applied through the induction coils 310 and 320, the temperature of the graphite mass placed on top of the silicon mass increased by induction heating and it turned red. Due to the radiant heat of the red turned graphite mass, the temperature of the inserted silicon mass increased. When the temperature of the silicon mass
became approximately 500 °C , the electrical resistance value of the silicon decreased, the induction current in the silicon mass increased and self-heating started. Immediately following the self-heating start of the silicon mass, the graphite mass was withdrawn from the crucible 200 in the upward direction. Further, melting of silicon was accelerated by increasing the inductive outputs of the upper placed induction coil 310 up to 350 kW, and of the lower placed induction coil 320 up to 150 kW. The temperature of the silicon mass which had started self-heating increased further and the silicon mass soon melted completely. The molten silicon S' did not come in contact with the crucible 200 since electromagnetic force acted on the inner wall of the crucible 200 which faced the molten silicon S'.

When the initially inserted silicon melted completely and maintained stably, the temperature control reactor 600 of the silicon ingot, which was placed right below the crucible 200, increased its temperature and a thermal gradient of approximately 35 °C/cm in the downward direction was maintained. Casting was started by continuously supplying silicon material having a granulated diameter range of 1 to 20mm to the crucible 200 from the raw material supply device 700 placed above the crucible 200 together with moving downwards the vertical motion device 500 which holds the molten silicon S'. When the vertical motion device 500 started moving downwards and the molten silicon S' came to a level lower than the lower edge of the lower placed induction coil 320, the electromagnetic force loaded on the molten silicon S' decreased and in turn, the molten silicon S' was cooled and solidified.

From the above, continuous casting was achieved by simultaneous continuous supply of the raw material and continuous solidification of the ingot. In this example, the casting speed was 2.0mm per minute, the induction power output during constant casting was approximately 260 kW for the upper placed induction coil 310 and approximately 80 kW for the lower placed induction coil 320. Casting was stopped when the total length of the ingot became 200cm.

After cooling the ingot that was cast with the above procedure to room temperature and removing from the vessel, the outward deflection of the inner edge of the crucible 200 was measured. As a result, it was confirmed that there was no deflection of the crucible 200.

### Example 2

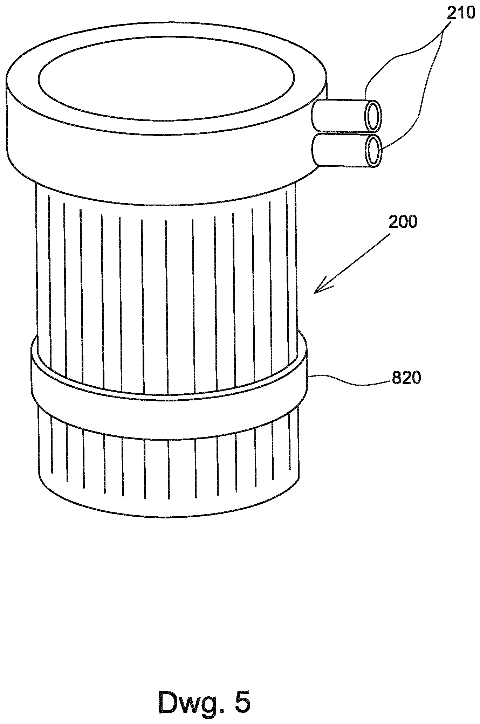

The following is an example of a silicon electromagnetic casting apparatus as shown in drawings 4 and 5. In the example, a cylindrical silicon ingot S was manufactured using an apparatus having a hard structure 820 made up of electrical insulating material fitted onto the outer peripheral surface of the crucible 200.

In the example, the cross section in the casting direction of the silicon ingot was circular in shape and its diameter was 600 mm. Accordingly, the inner diameter of the crucible 200 was 600 mm and its outer diameter 660 mm. The number of divisions for vertical electrical insulation of the crucible 200 was 60. The crucible 200 was divided into 60 segments and cooling water was circulated inside each segment. Mica was inserted in between each of the segments as an electrical insulation material. The total flow volume of the cooling water used inside the crucible 200 was 500L per minute.

Furthermore, a maximum output of 600 kW and frequency of approximately 6 kHz were used for the induction power supply. The induction coil 300' had three turns with an inner diameter of 670 mm and the height of 300 mm. The plasma jet device (not shown in the drawing) which heats the silicon solution from the upper side comprised a water-cooled plasma torch having a diameter of 98 mm and length of 1.5 m, direct current source of maximum output of 300 kW, a high-frequency oscillator for plasma gas ignition and a flow controller which controls the flow of argon gas. The diameter of the plasma jet orifice of the plasma torch was 18 mm.

Furthermore, the system in which the hard structure 820 made up of fiber reinforced plastic is fitted on the outer peripheral surface of the crucible 200 is shown in Dwg. 5. The hard structure 820 having a thickness of 2 mm and width of 50 mm was fitted along the outer edge of the crucible 200 just below the induction coil 300' in such a manner that it wound around and touched to the crucible.

The operating procedure for this example was as follows. Firstly, the graphite support 400 whose cross section in the downward direction had a diameter of 600 mm was mounted on the vertical motion device 500 and inserted in the crucible 200 in such a manner that the top surface of the pedestal is the same level as the lower edge of the induction coil 300'. Then, a silicon mass of 120 kg was placed on the graphite support 400. Then, the internal pressure of the reaction vessel 100 was decreased to 13.33 Pa (0.1 Torr) by using a vacuum pump and argon gas was supplied until the internal pressure was equal to the atmospheric pressure. Then, the plasma torch was moved downwards such that its tip was close to the silicon mass on the support and 200 L per minute of argon was made to flow through it. The direct current plasma was ignited between the cathode of the plasma torch and the silicon mass. After confirming the ignition of plasma, electric power was applied on the silicon mass by supplying induction power.

Increase of the silicon mass temperature was accelerated when the applied electric power was gradually increased after argon plasma ignition and application of induction power supply was started. Then the silicon mass began to melt. After the beginning of silicon melting, silicon raw material was further supplied from the raw material supply device 700 continuously until the quantity of the molten silicon S' reached to 250 kg. Due to the radiation from the plasma jet acted upon the silicon solution which had undergone induction melting in the crucible 200, the liquid state of silicon solution was stable and the silicon solution did not come in contact with the crucible 200 since electromagnetic force acted on the inner wall of the crucible 200 which faced the silicon solution.

After the initial melting process reached to a stable state, the temperature control reactor 600 of the silicon ingot, which was placed right below the crucible 200, increased the temperature and a thermal gradient of approximately 50 °C/cm in the downward direction of the silicon ingot S was maintained. Furthermore, casting was started by continuously supplying crushed silicon material into the crucible 200 from the raw material supply device 700 placed above the crucible and moving downwards the vertical motion device 500 which holds the molten silicon S' . When the vertical motion device 500 started moving downwards, continuous casting was attained by continuous supply of the raw material together with continuous solidification of the silicon ingot. In this example, the casting speed was 3.0 mm per minute, the induction power output during steady casting was approximately 400 kW and the output required for plasma generation was approximately 200 kW with a voltage of approximately 130 V and electric current of approximately 1500A. Casting was stopped when the total length of the ingot became 3 m.

After cooling the ingot that was cast with the mentioned procedure to room temperature and removed from the vessel, the outward deflection of the inner edge of the crucible 200 was measured. As a result, it was confirmed that there was no deflection of the crucible 200.

### Industrial Applicability

The present invention can be applied to silicon electromagnetic casting wherein high quality silicon ingot to be used in silicon substrates for solar cells is manufactured by melting a silicon mass by induction heating.

## Claims

1. A silicon electromagnetic casting apparatus comprising a reaction vessel, a conductive crucible disposed within the interior of the reaction vessel; and an induction coil installed on the outer circumference of the conductive crucible;
wherein a hard structure formed from an electrical insulating material being fitted onto the outer peripheral surface of the conductive crucible; wherein a constant pressure is maintained in the interior of the reaction vessel by using a prescribed gas, a silicon disposed within the conductive crucible is solidified into a silicon ingot subsequent to being melted into a molten silicon by induction heating by applying a terminal voltage to the induction coil wherein a solidification interface is formed between the molten silicon and the silicon ingot and the hard structure is fitted onto the outer peripheral surface of the conductive crucible at a position of the height of the solidification interface.

2. A silicon electromagnetic casting apparatus according to claim 1, wherein the conductive crucible has an inner square-shaped cross section wherein an inner side thereof is 35 cm.

3. A silicon electromagnetic casting apparatus according to claim 1, wherein the conductive crucible has an inner diameter of 35 cm or more.

4. A silicon electromagnetic casting apparatus according to claim 1, wherein
the conductive crucible has a square-shaped cross section with an inner side dimension of 35 cm and an outer side dimension of 41.6 cm, the conductive crucible being divided into 60 segments, with the length of each of the 60 segments being 70 cm, a cooling water being circulated in the 60 segments, and a mica electrical insulation material being inserted between each of the 60 segments,
the induction coil comprising an upper induction coil (310) placed above a lower induction coil (320), the upper and lower induction coils each having two turns around the outer side of the squared-shaped conductive crucible, the upper and lower induction coils each having an inner diameter of 42.6 cm and a height of 15 cm, the upper and lower induction coils connected to an induction power supply, the upper and lower induction coils positioned side-by-side at the center of the height of the conductive crucible,
a copper magnetic shield (330) having a thickness of 3 mm disposed between the upper and lower induction coils, the outer circumference of the copper magnetic shield cooled by a corrugated cooling tube, and
the hard structure comprising a fiber reinforced plastic fitted on the outer peripheral surface of the conductive crucible, the hard structure having an inner length of 41.6 cm along the outer peripheral surface of the conductive crucible, a beam thickness of 10 cm and a beam width of 3 cm, the hard structure fitted below the lower induction coil (320) so that the hard structure touches the conductive crucible.

5. A silicon electromagnetic casting apparatus according to claim 1, wherein
the conductive crucible has a circular-shaped cross section with an inner diameter of 600 mm and an outer diameter of 660 mm, the conductive crucible being divided into 60 segments, a cooling water being circulated in the 60 segments, and a mica electrical insulation material being inserted between each of the 60 segments,
the induction coil (300') having three turns with an inner diameter of 670 mm,
the hard structure comprising a fiber reinforced plastic and forming an annulus around the outer peripheral surface of the conductive crucible, the annulus having a thickness of 2 mm and a width of 50 mm, and
a water-cooled plasma torch with a plasma jet orifice of 18 mm for heating the top of the silicon disposed within the conductive crucible, the water-cooled plasma torch having a diameter of 98 mm and a length of 1.5 m, a direct current source having a maximum output of 300 kW, a high frequency oscillator for a plasma gas ignition and flow control to control the prescribed gas of argon.

6. A silicon electromagnetic casing apparatus according to claim 2, the hard structure comprises a fibre reinforced plastic having a Young's Modulus of 10 gigapascals or greater.

7. A silicon electromagnetic casting apparatus according to claim 4, wherein the upper and lower induction coils operate at different frequencies.

## Patentansprüche

1. Vorrichtung zum elektromagnetischen Gießen von Silizium, umfassend einen Reaktionsbehälter, einen leitfähigen Schmelztiegel, der im Inneren des Reaktionsbehälters angeordnet ist, und eine Induktionsspule, die am äußeren Umfang des leitfähigen Schmelztiegels verbaut ist;
wobei eine harte Struktur, die aus einem elektrisch isolierenden Material hergestellt ist, an der äußeren Umfangsfläche des leitfähigen Schmelztiegels angebracht ist; wobei im Inneren des Reaktionsbehälters mithilfe eines vorgegebenen Gases ein konstanter Druck aufrechterhalten wird, ein in dem leitfähigen Schmelztiegel angeordnetes Silizium dabei im Anschluss an sein Einschmelzen zu einer Siliziumschmelze durch Induktionsheizen durch Anlegen einer Klemmenspannung an die Induktionsspule zum Erstarren zu einem Silizium-Ingot gebracht wird, wobei zwischen der Siliziumschmelze und dem Silizium-Ingot eine Erstarrungsgrenzfläche gebildet wird und die harte Struktur auf einer Position der Höhe der Erstarrungsgrenzfläche an der äußeren Umfangsfläche des leitfähigen Schmelztiegels angebracht ist.

2. Vorrichtung zum elektromagnetischen Gießen von Silizium nach Anspruch 1, wobei der leitfähige Schmelztiegel einen inneren Querschnitt quadratischer Form hat, wobei eine Innenseite davon 35 cm beträgt.

3. Vorrichtung zum elektromagnetischen Gießen von Silizium nach Anspruch 1, wobei der leitfähige Schmelztiegel einen Innendurchmesser von 35 cm oder mehr hat.

4. Vorrichtung zum elektromagnetischen Gießen von Silizium nach Anspruch 1, wobei
der leitfähige Schmelztiegel einen Querschnitt quadratischer Form mit einem Innenseitenmaß von 35 cm und einem Außenseitenmaß von 41,6 cm hat, der leitfähige Schmelztiegel dabei in 60 Segmente unterteilt ist, wobei die Länge jedes der 60 Segmente 70 cm beträgt, ein Kühlwasser in den 60 Segmenten umgewälzt wird und ein Glimmermaterial zur elektrischen Isolierung zwischen jedes der 60 Segmente eingefügt ist,
die Induktionsspule eine obere Induktionsspule (310) aufweist, die über einer unteren Induktionsspule (320) positioniert ist, wobei die obere und die untere Induktionsspule jeweils zwei Wicklungen um die Außenseite des leitfähigen Schmelztiegels quadratischer Form haben, die obere und die untere Induktionsspule jeweils einen Innendurchmesser von 42,6 cm und eine Höhe von 15 cm haben, die obere und die untere Induktionsspule mit einer Induktionsenergieversorgung verbunden sind, die obere und die untere Induktionsspule am Mittelpunkt der Höhe des leitfähigen Schmelztiegels nebeneinander positioniert sind,
ein magnetischer Schild aus Kupfer (330) mit einer Dicke von 3 mm zwischen der oberen und der unteren Induktionsspule angeordnet ist, wobei der Außenumfang des magnetischen Schilds aus Kupfer von einem Well-Kühlrohr gekühlt wird, und
die harte Struktur einen faserverstärkten Kunststoff umfasst, der an der äußeren Umfangsfläche des leitfähigen Schmelztiegels angebracht ist, wobei die harte Struktur eine Innenlänge von 41,6 cm entlang der äußeren Umfangsfläche des leitfähigen Schmelztiegels, eine Balkendicke von 10 cm und eine Balkenbreite von 3 cm hat, wobei die harte Struktur unter der unteren Induktionsspule (320) angebracht ist, sodass die harte Struktur den leitfähigen Schmelztiegel berührt.

5. Vorrichtung zum elektromagnetischen Gießen von Silizium nach Anspruch 1, wobei
der leitfähige Schmelztiegel einen kreisförmigen Querschnitt mit einem Innendurchmesser von 600 mm und einem Außendurchmesser von 660 mm hat, der leitfähige Schmelztiegel dabei in 60 Segmente unterteilt ist, in den 60 Segmenten ein Kühlwasser umgewälzt wird und ein Glimmermaterial zur elektrischen Isolierung zwischen jedes der 60 Segmente eingefügt ist,
die Induktionsspule (300') drei Wicklungen mit einem Innendurchmesser von 670 mm hat,
die harte Struktur einen faserverstärkten Kunststoff umfasst und einen Ring um die äußere Umfangsfläche des leitfähigen Schmelztiegels bildet, wobei der Ring eine Dicke von 2 mm und eine Breite von 50 mm hat, und
ein wassergekühlter Plasmabrenner mit einer Plasmastrahlöffnung von 18 mm zum Erhitzen der Oberseite des in dem leitfähigen Schmelztiegel angeordneten Siliziums, wobei der wassergekühlte Plasmabrenner einen Durchmesser von 98 mm und eine Länge von 1,5 m, eine Gleichstromquelle mit einer Höchstleistung von 300 kW, einen Hochfrequenzoszillator für eine Plasmagasentzündung und einen Durchflussregler zur Regulierung des vorgeschriebenen Argongases hat.

6. Vorrichtung zum elektromagnetischen Gießen von Silizium nach Anspruch 2, wobei die harte Struktur einen faserverstärkten Kunststoff mit einem Elastizitätsmodul von 10 Gigapascal oder mehr umfasst.

7. Vorrichtung zum elektromagnetischen Gießen von Silizium nach Anspruch 4, wobei die obere und die untere Induktionsspule bei verschiedenen Frequenzen betrieben werden.

## Revendications

1. Appareil de coulage électromagnétique de silicium comprenant une cuve de réaction, un creuset conducteur disposé au sein du volume intérieur de la cuve de réaction ; et une bobine d'induction installée sur la circonférence externe du creuset conducteur ;
dans lequel une structure dure formée à partir d'un matériau isolant électrique est montée sur la surface périphérique externe du creuset conducteur ; dans lequel une pression constante est maintenue dans le volume intérieur de la cuve de réaction grâce à l'utilisation d'un gaz prescrit, un silicium disposé au sein du creuset conducteur étant solidifié en un lingot de silicium à la suite du fait qu'il a été fondu en du silicium en fusion par un chauffage par induction grâce à l'application d'une tension de borne à la bobine d'induction, dans lequel une interface de solidification est formée entre le silicium en fusion et le lingot de silicium et la structure dure est montée sur la surface périphérique externe du creuset conducteur à une certaine position de la hauteur de l'interface de solidification.

2. Appareil de coulage électromagnétique de silicium selon la revendication 1, le creuset conducteur possédant une coupe transversale interne de forme carrée où un côté interne de celui-ci est de 35 cm.

3. Appareil de coulage électromagnétique de silicium selon la revendication 1, le creuset conducteur possédant un diamètre interne de 35 cm ou davantage.

4. Appareil de coulage électromagnétique de silicium selon la revendication 1,
le creuset conducteur possédant une coupe transversale de forme carrée avec une dimension de côté interne de 35 cm et une dimension de côté externe de 41,6 cm, le creuset conducteur étant divisé en 60 segments, alors que la longueur de chacun des 60 segments est de 70 cm, une eau de refroidissement étant circulée dans les 60 segments, et un matériau d'isolement électrique au mica étant inséré entre chacun des 60 segments,
la bobine d'induction comprenant une bobine d'induction supérieure (310) qui est placée par-dessus une bobine d'induction inférieure (320), les bobines d'induction supérieure et inférieure possédant chacune deux enroulements autour de l'autre côté du creuset conducteur de forme carrée, les bobines d'induction supérieure et inférieure ayant chacune un diamètre interne de 42,6 cm et une hauteur de 15 cm, les bobines d'induction supérieure et inférieure étant connectées à une alimentation d'énergie d'induction, les bobines d'induction supérieure et inférieure étant positionnées côte à côte au niveau du centre de la hauteur du creuset conducteur,
un blindage magnétique de cuivre (330) possédant une épaisseur de 3 mm, étant disposé entre les bobines d'induction supérieure et inférieure, la circonférence externe du blindage magnétique de cuivre étant refroidie par un tube de refroidissement ondulé, et
la structure dure comprenant une matière plastique renforcée de fibres sur la surface périphérique externe du creuset conducteur, la structure dure possédant une longueur interne de 41,6 cm le long de la surface périphérique externe du creuset conducteur, une épaisseur de poutre de 10 cm et une largeur de poutre de 3 cm, la structure dure étant montée sous la bobine d'induction inférieure (320) de sorte que la structure dure touche le creuset conducteur.

5. Appareil de coulage électromagnétique de silicium selon la revendication 1,
le creuset conducteur possédant une coupe transversale de forme circulaire avec un diamètre interne de 600 mm et un diamètre externe de 660 mm, le creuset conducteur étant divisé en 60 segments, une eau de refroidissement étant circulée dans les 60 segments, et un matériau d'isolement électrique au mica étant inséré entre chacun des 60 segments,
la bobine d'induction (300') possédant trois enroulements avec un diamètre interne de 670 mm,
la structure dure comprenant une matière plastique renforcée de fibres et formant un anneau autour de la surface périphérique externe du creuset conducteur, l'anneau ayant une épaisseur de 2 mm et une largeur de 50 mm, et
une torche au plasma refroidie par eau avec un orifice de jet de plasma de 18 mm pour chauffer le haut du silicium disposé au sein du creuset conducteur, la torche au plasma refroidie par eau ayant un diamètre de 98 mm et une longueur de 1,5 m, une source de courant continu ayant une puissance de sortie maximum de 300 kW, un oscillateur à haute fréquence pour l'allumage du gaz plasma et un contrôle du flux pour contrôler le gaz prescrit d'argon.

6. Appareil de coulage électromagnétique de silicium selon la revendication 2, la structure dure comprenant une matière plastique renforcée de fibres possédant un module de Young de 10 gigapascals ou davantage.

7. Appareil de coulage électromagnétique de silicium selon la revendication 4, les bobines d'induction supérieure et inférieure opérant à des fréquences différentes.
